# EUROPEAN PATENT APPLICATION

(11) **EP 3 385 062 A1**
(43) Date of publication of application: **10.10.2018**
(21) Application number: 18153520.4
(22) Date of filing: 25.01.2018
(51) Int. Cl.: B29C 67/00

(54) **COLOR THREE-DIMENSIONAL PRINTING METHOD AND THREE-DIMENSIONAL PRINTING EQUIPMENT**

(30) Priority: 07.04.2017 TW 106111652
(71) Applicant: XYZprinting, Inc., New Taipei City 22201 (TW); Kinpo Electronics, Inc., New Taipei City 22201 (TW)
(72) Inventor: Ho, Kwan, 22201 New Taipei City (TW); Huang, Yu-Ting, 22201 New Taipei City (TW); Shih, Ko-Wei, 22201 New Taipei City (TW)
(74) Representative: 2K Patentanwälte Blasberg Kewitz & Reichel

(57) **Abstract**

A color three-dimensional printing method and three-dimensional printing equipment are provided, which are adapted to present a color pattern on a three-dimensional object. The method includes following steps. A color image including the color pattern is obtained (S201), and the color image includes a plurality of pixels. An inkjet depth of each of the pixels is determined based on a color feature of each of the pixels (S202). A three-dimensional model of the three-dimensional object is sliced to generate layer information of a plurality of layer objects (S203). A plurality of inkjet pictures corresponding to the layer objects are obtained based on the inkjet depths of the respective pixels (S204).

## Description

### TECHNICAL FIELD

The disclosure relates to a printing method, and particularly relates to a color three-dimensional printing method and three-dimensional printing equipment.

### BACKGROUND

With the progress in computer-aided manufacturing (CAM), manufacturers have developed the technology of three-dimensional (3-D) printing for rapidly embodying an original design concept. In fact, the three-dimensional printing technology is a collective term of a series of rapid prototyping (RP) techniques, and the basic principle is laminate manufacture, where a rapid prototyping machine is used to form cross-sectional shapes of a workpiece on the X-Y plane through scanning, shift intermittently at a layer thickness in the Z coordinates, and ultimately form three-dimensional objects. The three-dimensional printing technology is applicable regardless of the geometric shapes, and the RP technology produces excellent outputs in particular for complex parts, which significantly saves human labor and processing time and enables faithful presentation of a digital three-dimensional model designed by computer-aided design (CAD) software under the requirement of minimum time permitted.

Taking fused deposition modeling (FDM) as an example, it turns a forming material into wires and then heats and melts the forming material, so as to stack the material layer by layer on a forming stage according to the desired shape/profile to form a three-dimensional object. Currently, a color three-dimensional printing method is proposed. According to the method, layer objects forming a three-dimensional object are colored layer by layer by an inkjet mechanism during manufacture of the three-dimensional object. In a scenario where the method is applied, the inkjet mechanism of a three-dimensional printing apparatus may spray a color ink on an outer surface of the three-dimensional object (e.g., spraying color ink to the top of the uppermost layer object or spraying the color ink to the edge of the layer objects, etc.), so as to present a color pattern on the surface of the three-dimensional object. However, such presentation of the color pattern lacks diversity and does not render a unique visual effect. How to facilitate the diversity and aesthetics of color three-dimensional printing thus becomes an issue for researchers to work on.

### SUMMARY

The disclosure provides a color three-dimensional printing method and three-dimensional printing equipment capable of presenting a color pattern on a three-dimensional object with a special visual effect, so as to facilitate the diversity and aesthetics of three-dimensional printing.

An embodiment of the disclosure provides a color three-dimensional printing method. The method is adapted to present a color pattern on a three-dimensional object and includes steps as follows. A color image including the color pattern is obtained, and the color image includes a plurality of pixels. An inkjet depth of each of the pixels is determined based on a color feature of each of the pixels. A three-dimensional model of the three-dimensional object is sliced to generate layer information of a plurality of layer objects. A plurality of inkjet pictures corresponding to the layer objects are obtained according to the inkjet depth of each of the pixels.

From another perspective, an embodiment of the disclosure provides three-dimensional printing equipment including a storage apparatus and a processor. The processor is coupled to the storage apparatus and is configured to: obtain a color image of the color pattern, wherein the color image includes a plurality of pixels; determine an inkjet depth of each of the pixels based on a color feature of each of the pixels; slice a three-dimensional model of the three-dimensional object to generate layer information of a plurality of layer objects; and obtain a plurality of inkjet pictures corresponding to the layer objects based on the inkjet depths of the respective pixels.

Based on the above, the color three-dimensional printing method and three-dimensional printing equipment according to the embodiments of the disclosure determine the inkjet depths of the respective pixels based on the color features of the respective pixels of the color image, and may generate the inkjet pictures respectively recording a portion of the pixels based on the inkjet depths of the respective pixels. Accordingly, during the manufacture of the three-dimensional object, the three-dimensional printing apparatus may spray color ink on the layer objects based on the inkjet pictures to present the color pattern on the three-dimensional object with a special visual effect.

Several exemplary embodiments accompanied with figures are described in detail below to further describe the disclosure in details.

### BRIEF DESCRIPTION OF THE DRAWINGS

The accompanying drawings are included to provide further understanding, and are incorporated in and constitute a part of this specification. The drawings illustrate exemplary embodiments and, together with the description, serve to explain the principles of the disclosure.
FIG. 1 is a schematic view illustrating three-dimensional printing equipment according to an embodiment of the disclosure.
FIG. 2 is a flowchart illustrating a color three-dimensional printing method according to an embodiment of the disclosure.
FIG. 3 is a flowchart illustrating details of Step S202 according to an embodiment of the disclosure.
FIG. 4 is a schematic view illustrating a color three-dimensional printing method according to an embodiment of the disclosure .
FIG. 5 is a schematic view illustrating obtaining an inkjet depth according to an embodiment of the disclosure.

### DETAILED DESCRIPTION OF DISCLOSED EMBODIMENTS

Some embodiments of the disclosure are described in detail in the following with reference to the accompany drawings. Regarding the reference symbols in the following descriptions, when like or similar reference symbols are marked in different drawings, the like or similar reference symbols refer to like or similar components. The embodiments only constitute a portion of the invention, and do not disclose all the possible embodiments of the invention. More specifically, the embodiments merely serve as examples of a method and a system claimed in the invention.

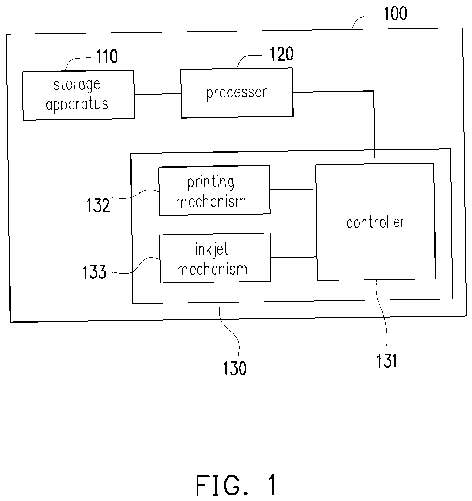

FIG. 1 is a schematic view illustrating three-dimensional printing equipment according to an embodiment of the disclosure. Referring to FIG. 1, a three-dimensional printing equipment 100 includes a storage apparatus 110, a processor 120, and a three-dimensional printing apparatus 130. The processor 120 is coupled to the storage apparatus 110 and the three-dimensional printing apparatus 130. In the embodiment, the processor 120 serves to construct a model based on a three-dimensional object, so as to generate a three-dimensional model image. In addition, the three-dimensional model image is compliant with a three-dimensional file format such as a polygon file format (PLY) or an OBJ file format, for example. The three-dimensional model in the three-dimensional model image is formed by a plurality of polygonal meshes. In addition, each of the polygonal meshes has a plurality of terminals, and the terminals have respectively different coordinates. In general, the polygonal meshes may be triangular meshes. In the embodiment, the processor 120 may slice the three-dimensional model in the three-dimensional model image into layers to obtain layer information. Based on the layer information, the processor 120 may control the three-dimensional printing apparatus 130 to perform a three-dimensional printing operation, so that the three-dimensional printing apparatus 130 may print the three-dimensional object layer by layer.

In the embodiment, the storage apparatus 110 may store data, and may be a buffer memory, an internal storage medium, an external storage medium, other types of storage apparatuses, or a combination thereof. For example, the buffer memory may include a random access memory, a read only memory, or other similar devices. For example, the internal storage medium may include a hard disk drive (HDD), a solid state disk, a flash storage apparatus, or other similar apparatuses. For example, the external storage medium may include an external hard drive, a USB drive, a cloud drive, or other similar apparatuses. In the embodiment, the storage apparatus 110 may store the three-dimensional model image, a plurality of layer images, a three-dimensional image modeling module, an image processing module, or an image analysis module, etc., so as to carry out slicing image processing in the respective embodiments of the disclosure.

In the embodiment, the processor 120 may execute a plurality of modules stored in the storage apparatus 110 to carry out image processing and image analysis in the respective embodiments of the disclosure. The processor 120 may be a central processing unit (CPU) or other programmable general/specific purpose microprocessors, digital signal processors (DSP), programmable controllers, application specific integrated circuits (ASICs), programmable logic devices (PLD), other similar processing apparatuses, or a combination of the apparatuses.

In the embodiment, the three-dimensional printing apparatus 130 may include a controller 131, a printing mechanism 132, and an inkjet mechanism 133. The processor 120 may provide a control signal to the controller 131 of the three-dimensional printing apparatus 130 based on the layer information to drive the three-dimensional printing apparatus 130. The controller 131 of the three-dimensional printing apparatus 130 may control the printing mechanism 132 and the inkjet mechanism 133 to carry out three-dimensional printing operation and inkjet operation. For example, the three-dimensional printing operation includes extruding a forming material. In addition, the three-dimensional printing apparatus 130 may perform an inkjet operation on the forming material after the forming material is substantially cured. Moreover, people having ordinary skills in the art shall understand that the three-dimensional printing apparatus 130 may also include other components required to perform three-dimensional printing together with a printing head, such as a stage, a feeding line, an inkjet line, a printing head linking mechanism, and the like. Thus, details in this regard will not be further discussed in the following.

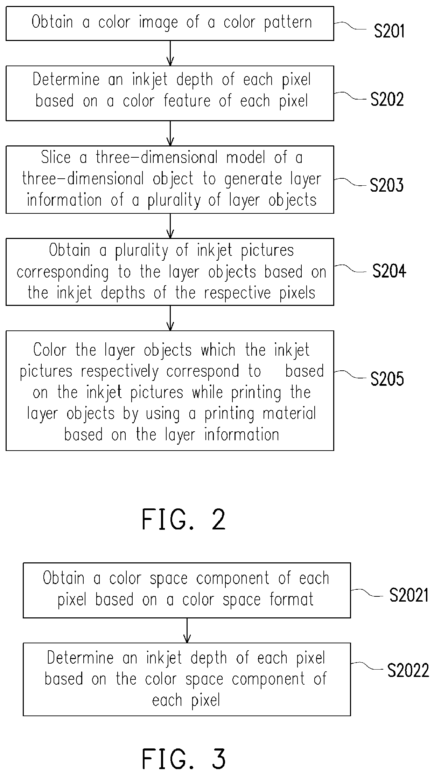

FIG. 2 is a flowchart illustrating a color three-dimensional printing method according to an embodiment of the disclosure. The method of the embodiment is suitable for the three-dimensional printing equipment 100 of FIG. 1. In the following, details of the three-dimensional printing method according to the embodiment are described with reference to the respective components of the three-dimensional printing equipment 100. The color three-dimensional printing method of the embodiment is suitable to present a color pattern on a three-dimensional object.

At Step S201, the processor 120 obtains a color image of the color pattern. In an embodiment, when the processor 120 obtains a three-dimensional model whose outer surface includes color information, the processor 120 may capture the color information of the three-dimensional model to generate the color image. Specifically, the processor 120 may generate the color image based on a coordinate position marked with color on the three-dimensional model and corresponding color data. In addition, the color image includes a plurality of pixels.

Then, at Step S202, the processor 120 determines an inkjet depth of each of the pixels based on a color feature of each of the pixels. The color feature may be at least one color space component of the pixel defined by a color space format. Alternatively, the color feature may also be a result generated by substituting at least one color space component of the pixel into a function. FIG. 3 is a flowchart illustrating details of Step S202 according to an embodiment of the disclosure. First of all, at Step S2021, the processor 120 obtains the color space component of each of the pixels based on the color space format. Then, at Step S2022, the processor 120 may determine the inkjet depth of each of the pixels based on the color space component of each of the pixels. The color space format may be RGB color space, HSV color space, HSL color space, YCbCr color space, or YUV color space, for example. It should be noted that the disclosure does not intend to impose a limitation on this regard. For example, if the color space format of the color image is an HSV color space, a color of each of the pixels may be represented by a hue component, a saturation component, and a value (brightness) component. If the color space format of the color image is an RGB color space, the color of each of the pixels may be represented by a red component, a green component, and a blue component. In an embodiment, after the processor 120 obtains the color feature of each of the pixels, the processor 120 may determine the inkjet depth of each of the pixels based on the color feature of each of the pixels. The inkjet depth is a distance with respect to an outer surface of the three-dimensional object. In other words, the pixels are classified into a plurality of pixel groups corresponding to different inkjet depths based on the color features of the pixels. Compared with presenting the respective pixels in the color image only on the outer surface of the three-dimensional object, the method of the embodiment is able to move positions where some pixels of the color image are presented toward the inside of the three-dimensional object based on the different inkjet depths.

Then, at Step S203, the processor 120 slices the three-dimensional model of the three-dimensional object to generate layer information of a plurality of layer objects. At Step S204, the processor 120 obtains a plurality of inkjet pictures corresponding to the layer objects based on the inkjet depths of the respective pixels. Generally speaking, the processor 120 slices the three-dimensional model by using multiple layer surfaces to obtain cross-sectional profiles of the layer objects. A slicing interval for slicing the three-dimensional model may be considered as a thickness of the layer object. Based on the cross-sectional profiles of the layer objects, the processor 120 may generate corresponding control code files. Here, the control code files are the layer information based on which the three-dimensional printing apparatus 130 is able to read and then execute print function accordingly. In other words, the controller of the three-dimensional printing apparatus 130 controls a printing component based on the control code files, so as to manufacture the respective layer objects layer by layer. In an embodiment, the control code file may be a G code file, for example. In addition, when the processor 120 slices the color three-dimensional model, the processor 120 may further generate the inkjet pictures corresponding to the layer objects. The processor 120 may convert the inkjet pictures into corresponding inkjet control information, and the three-dimensional printing apparatus 130 may control the inkjet mechanism 133 to perform the inkjet operation based on the inkjet control information.

It should be noted that, in an embodiment, after the processor 120 obtains the inkjet depths of the respective pixels of the color image, the processor 120 may adjust the original three-dimensional model based on the inkjet depths of the respective pixels to move the coordinate positions marked with color in the original three-dimensional model toward the inside of the three-dimensional model. Then, the processor 120 may slice the adjusted three-dimensional model to obtain the layer information of the respective layer objects and the corresponding inkjet pictures. Besides, in an embodiment, after the processor 120 obtains the inkjet depths of the respective pixels in the color image, the processor 120 may slice the original three-dimensional model to obtain the layer information of the respective layer objects and the corresponding inkjet pictures. Then, the inkjet pictures are adjusted based on the inkjet depths. Accordingly, adjusted inkjet pictures are generated by modifying positions of some or all of the pixels on the respective inkjet pictures. In other words, the inkjet pictures of the embodiments of the disclosure are ultimately generated based on the inkjet depths.

Then, at Step S205, while printing the layer objects by using a printing material based on the layer information, the three-dimensional printing apparatus 130 may color the layer objects which the inkjet pictures respectively correspond to based on the inkjet pictures. Each time when the three-dimensional printing apparatus 130 finishes printing a layer object, the three-dimensional printing apparatus 130 may perform the inkjet operation based on the inkjet picture corresponding to the layer object just printed, so as to spray an ink from the top of the layer object just printed. Therefore, by alternately performing the printing and inkjet operations, a three-dimensional object having a special visual effect is manufactured. Compared with presenting the color image only on the outer surface of the three-dimensional object, the method of the embodiment is able to present at least a portion of the color image in the inside of the three-dimensional object, thereby creating a visual effect of engraving.

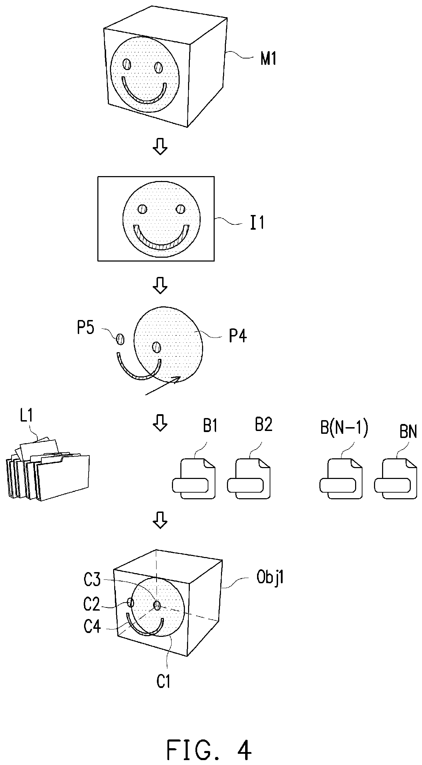

In order to describe the color printing method of the disclosure in greater detail, an embodiment is described in the following for further description. FIG. 4 is a schematic view illustrating a color three-dimensional printing method according to an embodiment of the disclosure. It should be noted that, in order to present the color image on the three-dimensional object with a three-dimensional engraving effect, the inkjet depths of the respective pixels may increase as the value component of the HSV color space increases. However, even though the embodiment in FIG. 4 adopts the value component in the HSV color space as the color feature, the disclosure is not limited thereto. Assuming that the color feature determining the inkjet depth is the lightness component of the HSL color space, in order to present the color image on the three-dimensional object with the engraving effect that brings forth a three-dimensional sensation, the inkjet depths of the respective pixels may increase as the lightness component of the HSL color space increases.

Specifically, referring to FIG. 4, the processor 120 may retrieve a three-dimensional model M1 from the storage apparatus 110, and extract color information of a surface of the three-dimensional model M1 to obtain a color image I1. The processor 120 may convert the color image I1 to the HSV color space from another color space format. For example, the processor 120 may convert the color image I1 from the RGB color space into the HSV color space. Then, the processor 120 may determine the inkjet depths corresponding to the respective pixels based on the color features of the respective pixels on the color image I1. For example, assuming that a pixel P4 corresponds to yellow whose RGB coordinate is (255, 255, 0), a value component of the pixel P4 is 1. Accordingly, the processor 120 determines that an inkjet depth of the pixel P4 is five units of length based on the value component of the pixel P4. In another example, assuming that a pixel P5 corresponds to dark blue whose RGB coordinate is (0, 0, 128), a value component of the pixel P5 is 0.5. Accordingly, the processor 120 determines that an inkjet depth of the pixel P5 is zero units of length based on the value component of the pixel P5. In other words, a position marking the pixel P4 whose value component is higher in the three-dimensional model is moved from the surface of the model to the inside of the three-dimensional model.

Accordingly, after slicing the three-dimensional model, the processor 120 may obtain layer information L1 and a plurality of inkjet pictures B1 to BN generated based on the inkjet depths, and the three-dimensional printing apparatus 130 may alternately perform the printing and inkjet operations based on the layer information L1 and the inkjet pictures B1 to BN to generate a three-dimensional object Obj1. In the example, based on the inkjet depths assigned to the respective pixels, a colored block C1 is located in the inside of the three-dimensional object Obj1, whereas colored blocks C2, C3, and C4 are located on a surface of the three-dimensional object Obj1. Moreover, in the embodiment, the printing material adopted by the three-dimensional printing apparatus 130 is a transparent material, such as a transparent polylactic acid (PLA) material or a transparent acrylic material. Accordingly, the inwardly located colored block C1 is visible.

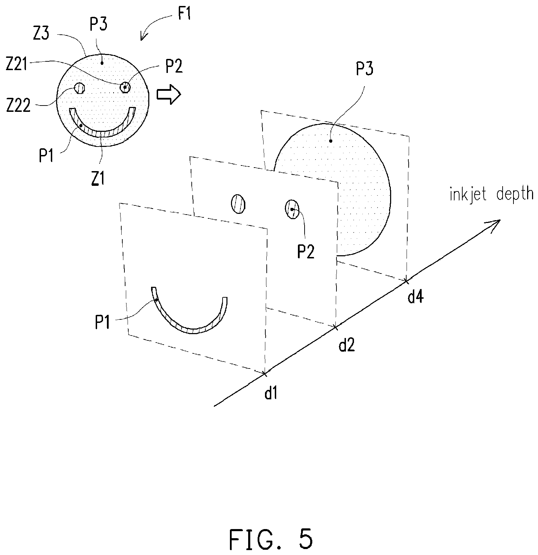

FIG. 5 is a schematic view illustrating obtaining an inkjet depth according to an embodiment of the disclosure. Referring to FIG. 5, the processor 120 obtains a color image F1. It is assumed that the color image F1 is formed to include three colors different from each other. The processor 120 analyzes the color feature of each pixel in the color image F1. Here, the processor 120 adopts a color space component of the pixel as the color feature of the pixel, and the color space component of each pixel (including a first pixel P1) in a region Z1 is the same. Similarly, the color space component of each pixel (including a second pixel P2) in regions Z21 and Z22 is the same, and the color space component of each pixel (including a third pixel P3) in a region Z3 is the same.

In an embodiment, after obtaining the color space component of each pixel in the color image F1, the processor 120 may use the color space component of each pixel to consult a lookup table, so as to obtain the inkjet depth of each pixel from a plurality of predetermined depths of the lookup table. Using FIG. 5 as an example, Table 1 is an example of a lookup table for finding the inkjet depth according to lightness component.

**Table 1**

| Lightness component | Inkjet depth (unit of length) |
|---|---|
| 0.00 to 0.20 | d1 |
| 0.21 to 0.40 | d2 |
| 0.41 to 0.60 | d3 |
| 0.61 to 0.80 | d4 |
| 0.81 to 1.00 | d5 |

Taking Table 1 as an example, when the processor 120 finds that the lightness component of the pixel P1 is 0.1, the processor 120 may find by checking Table 1 that the inkjet depth of the pixel P1 is d1. When the processor 120 finds that the lightness component of the pixel P2 is 0.3, the processor 120 may find by checking Table 1 that the inkjet depth of the pixel P2 is d2. When the processor 120 finds that the lightness component of the pixel P3 is 0.8, the processor 120 may find that the inkjet depth of the pixel P2 is d4 by consulting Table 1.

However, it should be noted that Table 1 merely serves an example to describe in greater detail and shall not be construed as a limitation on the disclosure. The lookup table may be designed and established based on practical needs. The disclosure does not intend to impose a limitation on this regard. In other words, since the color feature of the first pixel P1 is different from the color feature of the second pixel P1, the inkjet depth d1 of the first pixel P1 is also different from the inkjet depth d2 of the second pixel P2. As shown in FIG. 5, based on the consultation for the inkjet depths, all the pixels in the region Z1 correspond to the inkjet depth d1, all the pixels in the regions Z21 and Z22 correspond to the inkjet depth d2, and all the pixels in the region Z3 correspond to the inkjet depth d4. Then, the processor 120 may generate the inkjet pictures based on the inkjet depths of the respective pixels.

Moreover, in an embodiment, the processor 120 may compare the color space components of the respective pixels and rank the respective pixels based on the color space components of the respective pixels. Then, the processor 120 may determine the inkjet depths corresponding to the respective pixels based on the ranking orders of each of the respective pixels. Taking FIG. 5 as an example, after obtaining the color space component of each pixel in the color image F1, the processor 120 may rank all the pixels based on the color space components of the pixels. Taking the first pixel P1, the second pixel P2, and the third pixel P3 as an example, the processor may rank the first pixel P1, the second pixel P2, and the third pixel P3 based on the color space components. Then, the processor 120 may determine the inkjet depths of the first pixel P1, the second pixel P2, and the third pixel P3 based on the ranking order of the first pixel P1, the ranking order of the second pixel P2, and the ranking order of the third pixel P3. Specifically, when the first pixel P1 is ranked "1", the processor 120 may directly determine that the inkjet depth of the first pixel P1 is d1. When the second pixel P2 is ranked "2", the processor 120 may directly determine that the inkjet depth of the second pixel P2 is d2. When the third pixel P3 is ranked "3", the processor 120 may directly determine that the inkjet depth of the third pixel P3 is d4. In another embodiment, the processor 120 may also assign a plurality of inkjet depths in an arithmetic sequence to the respective pixels based on the ranking order of the respective pixels. Then, the processor 120 may generate the inkjet pictures based on the inkjet depths of the respective pixels, and drive the three-dimensional printing apparatus 130 to present the color pattern on the manufactured three-dimensional object with a special visual effect based on the inkjet pictures.

In view of the foregoing, the color three-dimensional printing method and three-dimensional printing equipment according to the embodiments of the disclosure determine the inkjet depths of the respective pixels based on the color features of the respective pixels of the color image, and may generate the inkjet pictures corresponding to the layer objects based on the inkjet depths of the respective pixels. Accordingly, during the manufacture of the three-dimensional object, the three-dimensional printing apparatus may spray color ink on the layer objects based on the inkjet pictures to present the color image on the three-dimensional object with a special visual effect. Besides, by determining the inkjet depth based on the brightness or lightness of the pixel, the three-dimensional printing apparatus according to the embodiments of the disclosure is able to present the color image on the three-dimensional object with a profound three-dimensional sensation.

## Claims

1. A color three-dimensional printing method, adapted to present a color pattern on a three-dimensional object (Obj1), the method comprising:
obtaining (S201) a color image (I1, F1) of the color pattern, wherein the color image (I1, F1) comprises a plurality of pixels (P1, P2 P3, P4, P5);
determining (S202) an inkjet depth of each of the pixels (P1, P2 P3, P4, P5) based on a color feature of each of the pixels (P1, P2 P3, P4, P5);
slicing (S203) a three-dimensional model (M1) of the three-dimensional object (Obj1) to generate layer information (L1) of a plurality of layer objects; and
obtaining (S204) a plurality of inkjet pictures (B1-BN) corresponding to the layer objects based on the inkjet depth of each of the pixels (P1, P2 P3, P4, P5).

2. The color three-dimensional printing method as claimed in claim 1, wherein the step of determining the inkjet depth of each of the pixels (P1, P2 P3, P4, P5) based on the color feature of each of the pixels (P1, P2 P3, P4, P5) comprises:
obtaining (S2021) a color space component of each of the pixels (P1, P2 P3, P4, P5) based on a color space format; and
determining (S2022) the inkjet depth of each of the pixels (P1, P2 P3, P4, P5) based on the color space component of each of the pixels (P1, P2 P3, P4, P5).

3. The color three-dimensional printing method as claimed in claim 2, wherein the step of determining the inkjet depth of each of the pixels (P1, P2 P3, P4, P5) based on the color space component of each of the pixels (P1, P2 P3, P4, P5) comprises:
using the color space component of each of the pixels (P1, P2 P3, P4, P5) to consult a lookup table to obtain the inkjet depth of each of the pixels (P1, P2 P3, P4, P5) from a plurality of predetermined depths in the lookup table.

4. The color three-dimensional printing method as claimed in claim 2, wherein the step of determining the inkjet depth of each of the pixels (P1, P2 P3, P4, P5) based on the color space component of each of the pixels (P1, P2 P3, P4, P5) comprises:
comparing the color space components of the pixels (P1, P2 P3, P4, P5) to rank the pixels (P1, P2 P3, P4, P5) based on the color space components; and
determining the inkjet depths corresponding to the pixels (P1, P2 P3, P4, P5) based on a ranking order of each of the pixels (P1, P2 P3, P4, P5).

5. The color three-dimensional printing method as claimed in claim 2, further comprising:
converting the color image (I1, F1) into the color space format from another color space format.

6. The color three-dimensional printing method as claimed in claim 2, wherein the color space component of each of the pixels (P1, P2 P3, P4, P5) comprises a value component of HSV color space or a lightness component of HSL color space.

7. The color three-dimensional printing method as claimed in claim 6, wherein the inkjet depth of each of the pixels (P1, P2 P3, P4, P5) increases as the value component or the lightness component increases, and the inkjet depth is a distance with respect to an outer surface of the three-dimensional object.

8. The color three-dimensional printing method as claimed in claims 1 or 2, further comprising:
coloring (S205) the layer objects which the inkjet pictures (B1-BN) respectively correspond to based on the inkjet pictures (B1-BN) while printing the layer objects by using a printing material based on the layer information (L1).

9. The color three-dimensional printing method as claimed in claim 8, wherein the printing material comprises a transparent material.

10. The color three-dimensional printing method as claimed in claim 1, wherein the pixels (P1, P2 P3, P4, P5) comprise a first pixel and a second pixel, and the inkjet depth of the first pixel is different from the inkjet depth of the second pixel if the color feature of the first pixel is different from the color feature of the second pixel.

11. A three-dimensional printing equipment (100), comprising:
a storage apparatus (110); and
a processor (120), coupled to the storage device and configured to:
obtain a color image (I1, F1) of the color pattern, wherein the color image (I1, F1) comprises a plurality of pixels (P1, P2 P3, P4, P5);
determine an inkjet depth of each of the pixels (P1, P2 P3, P4, P5) based on a color feature of each of the pixels (P1, P2 P3, P4, P5);
slice a three-dimensional model of the three-dimensional object (Obj1) to generate layer information (L1) of a plurality of layer objects; and
obtain a plurality of inkjet pictures (B1-BN) corresponding to the layer objects based on the inkjet depth of the each of the pixels (P1, P2 P3, P4, P5).

12. The three-dimensional printing equipment (100) as claimed in claim 11, wherein the processor (120) is configured to further perform:
coloring the layer objects which the inkjet pictures (B1-BN) respectively correspond to based on the inkjet pictures (B1-BN) while printing the layer objects by using a printing material based on the layer information (L1).
